# EUROPÄISCHE PATENTANMELDUNG

(11) **EP 3 023 299 A2**
(43) Veröffentlichungstag der Anmeldung: **25.05.2016**
(21) Anmeldenummer: 15002526.0
(22) Anmeldetag: 26.08.2015
(51) Int. Cl.: B60Q 1/08, B60Q 1/14, B60Q 1/10, B60Q 1/24

(54) **ANORDNUNG EINES SCHEINWERFERMODULS AN EINEM FAHRZEUG, INSBESONDERE AN EINEM NUTZFAHRZEUG**

(30) Priorität: 19.11.2014 DE 102014017047
(71) Anmelder: MAN Truck & Bus AG, 80995 München (DE)
(72) Erfinder: Brüchner, Nathan, 85622 Feldkirchen (DE)

(57) **Zusammenfassung**

Die Erfindung betrifft eine Anordnung eines Scheinwerfermoduls an einem Fahrzeug, insbesondere an einem Nutzfahrzeug, wobei das Scheinwerfermodul (7) einen Scheinwerfer (9) aufweist, mittels dem ein, in Fahrzeug-Längsrichtung (x) gesehen, vor dem Fahrzeug (1) liegender Fahrstreckenbereich beleuchtbar ist, wobei das Fahrzeug (1) eine Bild-Erfassungseinrichtung (11), insbesondere einer Kamera, aufweist, mittels der ein für eine Lichtsteuerung, insbesondere für eine Lichtverteilungssteuerung, des Scheinwerfers (9) relevanter Fahrstreckenbereich bildlich und/oder filmisch erfassbar ist, wobei das Fahrzeug (1) eine Bild-Verarbeitungseinrichtung (13) aufweist, mittels der aus dem mittels der Bild-Erfassungseinrichtung (11) erfassten Fahrstreckenbereich für die Lichtsteuerung relevante Informationen extrahierbar sind, und wobei das Fahrzeug (1) eine Regel- und/oder Steuereinrichtung (15) aufweist, mittels der in Abhängigkeit von den ermittelten Informationen die Beleuchtung, insbesondere die Lichtverteilung, des Scheinwerfers (9) selbsttätig einstellbar und/oder verstellbar ist. Erfindungsgemäß ist die Bild-Erfassungseinrichtung (11) integraler Bestandteil des Scheinwerfermoduls (7), so dass die Bild-Erfassungseinrichtung (11) und der Scheinwerfer (9) eine an dem Fahrzeug (1) festlegbare und/oder montierbare Baueinheit ausbilden.

## Beschreibung

Die Erfindung betrifft eine Anordnung eines Scheinwerfermoduls an einem Fahrzeug, insbesondere an einem Nutzfahrzeug, nach dem Oberbegriff des Patentanspruches 1, ein Scheinwerfermodul für ein Fahrzeug, insbesondere für ein Nutzfahrzeug, nach dem Oberbegriff des Patentanspruchs 12 sowie ein Fahrzeug, insbesondere ein Nutzfahrzeug, mit der Anordnung und/oder mit dem Scheinwerfermodul nach dem Patentanspruch 13.

Es ist bekannt, bei Fahrzeugen Scheinwerfer, insbesondere Frontscheinwerfer, vorzusehen, deren Belichtungseigenschaften in Abhängigkeit von definierten Verkehrssituationen selbsttätig bzw. automatisch eingestellt werden. Dabei kann beispielsweise die Lichtverteilung des Frontscheinwerfers derart eingestellt werden, dass, in Fahrzeug-Längsrichtung gesehen, vor dem Fahrzeug fahrende Fahrzeuge oder entgegenkommende Fahrzeuge nicht bzw. nur in einem deutlich verringertem Maß von dem Frontscheinwerfer geblendet werden. Ebenso ist es beispielsweise auch bekannt, die Lichtverteilung des Frontscheinwerfers an den Verlauf der Fahrstrecke anzupassen, so dass die Fahrstrecke stets optimal für den Fahrer des Fahrzeugs beleuchtet bzw. ausgeleuchtet wird.

Um die Belichtungseigenschaften des Scheinwerfers in Abhängigkeit von der aktuellen Verkehrssituation einstellen zu können, wird an dem Fahrzeug üblicherweise eine Kamera vorgesehen, mittels der für die Lichtsteuerung des Scheinwerfers relevante Fahrstreckenbereiche bildlich oder filmisch erfasst werden können. Mittels einer Bild-Verarbeitungseinrichtung werden dann aus den mittels der Kamera erfassten Fahrstreckenbereichen für die Lichtsteuerung relevante Information extrahiert und die Beleuchtung des Scheinwerfers in Abhängigkeit von diesen Informationen mittels einer Regel- und/oder Steuereinrichtung selbsttätig eingestellt bzw. verstellt. Die Kamera ist dabei üblicherweise im Innenraum des Fahrzeugs zentral hinter einer Windschutzscheibe des Fahrzeugs angeordnet.

Aus der DE 10 2012 018 117 A1 ist beispielsweise eine Fahrerassistenzvorrichtung zum Ansteuern einer frontalen Scheinwerfereinrichtung eines Fahrzeugs bekannt, bei der eine Kamera zum Aufnehmen eines Bilds eines in Fahrtrichtung vor dem Fahrzeug befindlichen Umgebungsbereichs vorgesehen ist. Dabei ist eine elektronische Steuereinrichtung vorgesehen, mittels der in dem Bild der Kamera eine Lichtquelle eines weiteren Fahrzeugs identifiziert und die Scheinwerfereinrichtung abhängig von der identifizierten Lichtquelle in einen Blendschutzmodus geschaltet werden kann. Die Umschaltung der Scheinwerfereinrichtung im Blendschutzmodus erfolgt hier zusätzlich unter Berücksichtigung einer mittels einer Objekterfassungseinrichtung bestimmten relativen Position des weiteren Fahrzeugs in Fahrtrichtung relativ zum Fahrzeug. Auf diese Weise kann der Zeitpunkt des Umschaltens in den Blendschutzmodus, insbesondere bei einem Überholmanöver, optimiert werden. Des Weiteren ist die Kamera der Fahrerassistenzvorrichtung hier im Innenraum des Fahrzeugs hinter einer Windschutzscheibe des Fahrzeugs angeordnet.

Aufgabe der Erfindung ist es, eine Anordnung eines Scheinwerfermoduls an einem Fahrzeug, insbesondere an einem Nutzfahrzeug, und ein Scheinwerfermodul für ein Fahrzeug, insbesondere für ein Nutzfahrzeug, bereitzustellen, mittels denen ein Scheinwerfer mit einer auf Bild- und/oder Filmdaten basierenden Lichtsteuerung auf besonders einfache Weise an dem Fahrzeug vorgesehen werden kann.

Diese Aufgabe wird durch die Merkmale der unabhängigen Ansprüche gelöst. Bevorzugte Weiterbildungen sind in den Unteransprüchen offenbart.

Gemäß Patentanspruch 1 wird eine Anordnung eines Scheinwerfermoduls an einem Fahrzeug, insbesondere an einem Nutzfahrzeug, vorgeschlagen, wobei das Scheinwerfermodul einen Scheinwerfer aufweist, mittels dem ein, in Fahrzeug-Längsrichtung gesehen, vor dem Fahrzeug liegender Fahrstreckenbereich beleuchtet werden kann, wobei das Fahrzeug eine Bild-Erfassungseinrichtung, insbesondere eine Kamera, aufweist, mittels der ein für eine Lichtsteuerung, insbesondere für eine Lichtverteilungssteuerung, des Scheinwerfers relevanter Fahrstreckenbereich bildlich und/oder filmisch erfasst werden kann, wobei das Fahrzeug eine Bild-Verarbeitungseinrichtung aufweist, mittels der aus dem mittels der Bild-Erfassungseinrichtung erfassten Fahrstreckenbereich für die Lichtsteuerung relevante Informationen extrahiert werden können, und wobei das Fahrzeug eine Regel- und/oder Steuereinrichtung aufweist, mittels der in Abhängigkeit von den ermittelten Informationen die Beleuchtung, insbesondere die Lichtverteilung, des Scheinwerfers selbsttätig eingestellt und/oder verstellt werden kann. Erfindungsgemäß ist die Bild-Erfassungseinrichtung integraler Bestandteil des Scheinwerfermoduls, so dass die Bild-Erfassungseinrichtung und der Scheinwerfer eine an dem Fahrzeug separat verbaubare bzw. festlegbare und/oder montierbare Baueinheit ausbilden.

Durch die erfindungsgemäße Anordnung kann ein Scheinwerfer mit einer auf Bild- und/oder Filmdaten basierenden Lichtsteuerung auf besonders einfache Weise an dem Fahrzeug vorgesehen werden, da die Bild-Erfassungseinrichtung nun nicht mehr separat bzw. getrennt von dem Scheinwerfermodul an dem Fahrzeug festgelegt werden muss. So wird die Montage des Scheinwerfers deutlich vereinfacht. Dies wirkt sich insbesondere dann vorteilhaft aus, wenn der Scheinwerfer mit der auf Bild- und/der Filmdaten basierenden Lichtsteuerung eine Zusatzausstattung des Fahrzeugs ausbildet, die lediglich optional bzw. auf Kundenwunsch eingebaut wird. Des Weiteren ist die erfindungsgemäße Anordnung auch besonders vorteilhaft für eine Nachrüstung eines Scheinwerfers mit einer auf Bild- oder Filmdaten basierenden Lichtsteuerung. Der nachzurüstende Scheinwerfer kann auf einfache Weise in die bestehende Fahrzeugarchitektur eingebunden werden, da lediglich der auszutauschende Scheinwerfer ohne Lichtsteuerung mit dem nachzurüstenden Scheinwerfer mit Lichtsteuerung ausgetauscht werden muss und die Bild-Erfassungseinrichtung bzw. eine signaltechnische Verbindung zwischen der Bild-Erfassungseinrichtung und dem Scheinwerfer nicht noch zusätzlich an dem Fahrzeug vorgesehen werden muss. So wird der montagetechnische Aufwand für die Nachrüstung deutlich verringert.

Grundsätzlich muss die Regel- und/oder Steuereinrichtung kein integraler Bestandteil des Scheinwerfermoduls sein, um die auf Bild- und/oder Filmdaten basierende Lichtsteuerung an dem Fahrzeug vorsehen zu können. Bevorzugt ist es jedoch, wenn auch die Regel- und/oder Steuereinrichtung integraler Bestandteil des Scheinwerfermoduls ist. So wird das Vorsehen bzw. die Nachrüstung eines Scheinwerfers mit einer auf Bild- und/oder Filmdaten basierenden Lichtsteuerung noch weiter vereinfacht. Ebenso bevorzugt ist die Bild-Verarbeitungseinrichtung integraler Bestandteil des Scheinwerfermoduls, um das Vorsehen bzw. die Nachrüstung eines Scheinwerfers mit einer auf Bild- und/oder Filmdaten basierenden Lichtsteuerung weiter zu vereinfachen.

Besonders bevorzugt sind alle für die Lichtsteuerung des Scheinwerfers relevanten Komponenten integraler Bestandteil des Scheinwerfermoduls, um das Vorsehen bzw. die Nachrüstung des Scheinwerfers möglichst einfach zu gestalten.

In einer bevorzugten Ausführung weist die Bild-Verarbeitungseinrichtung eine Objekterkennungs-Funktion auf, mittels der in dem mittels der Bild-Erfassungseinrichtung erfassten Fahrstreckenbereich befindliche Objekte erkannt deren Position relativ zu der Bild-Erfassungseinrichtung ermittelt werden können. So kann die Beleuchtung des Scheinwerfers in Abhängigkeit von den erfassten Objekten und deren Positionen relativ zu der Bild-Erfassungseinrichtung eingestellt bzw. verstellt werden. Die Beleuchtung des Scheinwerfers kann dann auf besonders einfache Weise derart angepasst werden, dass vor dem Fahrzeug fahrende Fahrzeuge oder entgegenkommende Fahrzeuge nicht bzw. in einem deutlich verringerten Maß von dem Scheinwerfer geblendet werden. Alternativ und/oder zusätzlich kann die Bild-Erfassungseinrichtung auch eine Streckenverlauf-Erkennungsfunktion aufweisen, mittels der der Streckenverlauf des mittels der Bild-Erfassungseinrichtung erfassten Fahrstreckenbereichs ermittelt werden kann. Die Beleuchtung des Scheinwerfers kann dann an den ermittelten Streckenverlauf angepasst werden, so dass die Fahrstrecke stets möglichst vollständig sichtbar für den Fahrer des Fahrzeugs beleuchtet bzw. ausgeleuchtet wird.

Bevorzugt weist das Fahrzeug wenigstens eine elektrische Energie-Versorgungseinrichtung auf, mittels der das Scheinwerfermodul mit elektrischer Energie versorgt werden kann. Bevorzugt ist die Energieversorgungs-Einrichtung dabei kein integraler Bestandteil des Scheinwerfers, um den Scheinwerfer einfach auszubilden und auf zuverlässige Weise mit elektrischer Energie versorgen zu können. Zudem kann so eine ohnehin bereits am Fahrzeug vorgesehene Energieversorgungs-Einrichtung zur Energieversorgung des Scheinwerfermoduls verwendet werden.

Konkret kann die Energieversorgungs-Einrichtung beispielsweise eine Batterie, insbesondere eine Starterbatterie, des Fahrzeugs und/oder ein elektrischer Generator des Fahrzeugs sein, um die Energieversorgungs-Einrichtung besonders einfach und zuverlässig auszubilden. Vorzugsweise weist das Scheinwerfermodul ein einziges Energieversorgungs-Verbindungselement, insbesondere einen Stecker auf, mittels dem das Scheinwerfermodul energieübertragend mit der elektrischen Energieversorgungs-Einrichtung verbunden werden kann. So wird die Montage des Scheinwerfermoduls weiter vereinfacht.

Weiter bevorzugt weist das Fahrzeug eine, insbesondere manuell, durch den Fahrer des Fahrzeugs betätigbare Betätigungseinrichtung, insbesondere eine Taste und/oder einen Schalter, auf, durch deren Betätigung das Scheinwerfermodul aktiviert und deaktiviert werden kann, wobei im deaktivierte Zustand des Scheinwerfermoduls die Komponenten des Scheinwerfermoduls ausgeschaltet sind, und wobei im aktivierten Zustand des Scheinwerfermoduls die Komponenten des Scheinwerfermoduls eingeschaltet sind. Mittels der Betätigungseinrichtung kann der Fahrer des Fahrzeugs das Scheinwerfermodul je nach Bedarf bzw. wie gewünscht aktivieren und deaktivieren. Bevorzugt ist die Betätigungseinrichtung kein integraler Bestandteil des Scheinwerfermoduls, um das Scheinwerfermodul einfach auszubilden.

Vorzugsweise weist das Fahrzeug eine Überwachungseinrichtung auf, mittels der die Funktion der Komponenten des Scheinwerfermoduls überwacht und/oder überprüft werden kann. Sofern die Komponenten des Scheinwerfermoduls nicht voll funktionsfähig sind, kann dem Fahrer des Fahrzeugs dies dann beispielsweise mittels einer geeigneten Anzeigeeinrichtung, insbesondere mittels eines Bildschirms, angezeigt werden. Bevorzugt ist die Überwachungseinrichtung dabei kein integraler Bestandteil des Scheinwerfermoduls, um das Scheinwerfermodul besonders einfach ausbilden zu können.

Sofern die Betätigungseinrichtung und die Überwachungseinrichtung kein integraler Bestandteil des Scheinwerfermoduls sind, weist das Scheinwerfermodul vorzugsweise ein einziges Signal-Verbindungselement, insbesondere einen Stecker auf, mittels dem die Betätigungseinrichtung und die Überwachungseinrichtung signaltechnisch mit dem Scheinwerfermodul verbunden werden können. So können die Betätigungseinrichtung und die Überwachungseinrichtung auf besonders einfache Weise bzw. mit besonders geringem montagetechnischen Aufwand signaltechnisch mit dem Scheinwerfermodul verbunden werden.

Sofern andere oder weitere Komponenten des Fahrzeugs, die nicht integraler Bestandteil des Scheinwerfermoduls sind, signaltechnisch mit dem Scheinwerfermodul verbunden werden müssen, ist es natürlich von Vorteil, wenn auch diese Komponenten mittels eines einzigen Signal-Verbindungselements, insbesondere eines Steckers, signaltechnisch mit dem Scheinwerfermodul verbunden werden können.

Alternativ können die Betätigungseinrichtung und/oder die Überwachungseinrichtung und/oder weitere Komponenten des Fahrzeugs, die nicht integraler Bestandteil des Scheinwerfermoduls sind, auch mittels einer kabellosen Signal-Übertragungseinrichtung signaltechnisch mit dem Scheinwerfermodul verbunden werden. So ist eine besonders einfache Montage des Scheinwerfermoduls möglich. Die kabellose Signalübertragung kann dabei beispielsweise mittels einer Bluetooth-Verbindung oder mittels einer W-LAN-Verbindung erfolgen.

In einer bevorzugten Ausführung ist eine Schwenkausgleichseinrichtung vorgesehen, mittels der Schwenkbewegungen, insbesondere Nick- und/oder Wankbewegungen, des Scheinwerfers relativ zur Fahrbahn ausgleichbar sind, wobei die Schwenkausgleichseinrichtung eine Schwenkerfassungseinrichtung, insbesondere wenigstens einen Beschleunigungssensor und/oder wenigstens ein Gyroskop, aufweist, mittels der Schwenkbewegungen des Scheinwerfers relativ zur Fahrbahn erfassbar sind, wobei bevorzugt vorgesehen ist, dass die Schwenkerfassungseinrichtung integraler Bestandteil des Scheinwerfermoduls ist. Mittels einer derartigen Schwenkausgleichseinrichtung können Schwenkbewegungen des Fahrzeugs, insbesondere aufgrund der fahrdynamischen Eigenschaften des Fahrzeugs und/oder aufgrund einer Veränderung der Fahrzeugbeladung und/oder einer Fahrzeug-Anhängelast, ausgeglichen werden. So kann stets eine optimale Beleuchtung der Fahrstrecke mittels des Scheinwerfers sichergestellt werden.

Weiter bevorzugt ist das Scheinwerfermodul mittels einer Festlegungseinrichtung relativ zu dem Fahrzeug verschwenkbar an dem Fahrzeug festgelegt. Die Schwenkausgleichseinrichtung weist dann eine Schwenkeinrichtung auf, mittels der das Scheinwerfermodul in Abhängigkeit von den mittels der Schwenkerfassungseinrichtung erfassten Schwenkbewegungen relativ zu dem Fahrzeug verschwenkbar ist. So können die Schwenkbewegungen des Scheinwerfers relativ zur Fahrbahn auf einfache Weise ausgeglichen werden, ohne die Beleuchtung des Scheinwerfers verstellen zu müssen. Insbesondere bei großen Schwenkwinkeln ist diese Ausführung der Schwenkausgleichseinrichtung vorteilhaft. Bevorzugt ist die Schwenkeinrichtung integraler Bestandteil des Scheinwerfermoduls, um das Vorsehen bzw. die Nachrüstung des Scheinwerfers wiederum möglichst einfach zu gestalten.

Alternativ und/oder zusätzlich kann die Schwenkausgleichseinrichtung auch signaltechnisch mit der Regel- und/oder Steuereinrichtung verbunden sein. Mittels der Regel- und/oder Steuereinrichtung kann dann die Beleuchtung des Scheinwerfers in Abhängigkeit von den mittels der Schwenkerfassungseinrichtung erfassten Schwenkbewegungen eingestellt und/oder verstellt werden. Auf diese Weise können die Schwenkbewegungen des Scheinwerfers relativ zur Fahrbahn auf besonders einfache Weise ausgeglichen werden.

Vorzugsweise ist das Scheinwerfermodul in einen, in Fahrzeug-Längsrichtung gesehen, vorderen Bereich des Fahrzeugs angeordnet, um die Belichtung des vor dem Fahrzeug liegenden Fahrstreckenbereichs auf einfache und zuverlässige Weise gewährleisten zu können. Weiter bevorzugt ist das Scheinwerfermodul, in Fahrzeugquerrichtung gesehen, mittig bzw. zentral am Fahrzeug angeordnet, um dem vor dem Fahrzeug liegenden Fahrstreckenbereich für den Fahrer des Fahrzeugs optimal zu belichten bzw. auszuleuchten.

Besonders bevorzugt ist das Scheinwerfermodul als Zusatzscheinwerfermodul des Fahrzeugs ausgebildet. Mittels des Zusatzscheinwerfermoduls kann wird die Belichtung bzw. die Ausleuchtung des vor dem Fahrzeug liegenden Fahrstreckenbereich deutlich verbessert, da dieser zusätzlich zu den gesetzlich vorgeschriebenen Frontscheinwerfern des Fahrzeugs vorgesehen ist. Das Zusatzscheinwerfermodul kann zudem auf besonders einfache Weise bzw. mit besonders geringem Aufwand vorgesehen bzw. nachgerüstet werden, da es üblicherweise außenseitig an dem Fahrzeug angeordnet wird. So kann die auf Bild- und/oder Filmdaten basierende Lichtsteuerung bei Fahrzeugen, insbesondere bei älteren Fahrzeugen, die eine derartige Lichtsteuerung nicht aufweisen und bei denen eine Nachrüstung einer derartigen Lichtsteuerung mit einem hohen Aufwand verbunden wäre, auf besonders einfache Weise nachgerüstet werden. Bevorzugt ist das Scheinwerfermodul, insbesondere außenseitig, an einem Dach des Fahrzeugs, insbesondere an einem Dach eines Führerhauses eines als Lastkraftwagen ausgebildeten Fahrzeugs, festgelegt und/oder montiert, um das Scheinwerfermodul auf einfache und funktionsoptimierte Weise an dem Fahrzeug festzulegen bzw. zu montieren.

Zur Lösung der bereits genannten Aufgabe wird ferner ein Scheinwerfermodul für ein Fahrzeug, insbesondere für ein Nutzfahrzeug, beansprucht, mit einem Scheinwerfer, mittels dem ein, in Fahrzeug-Längsrichtung gesehen, vor dem Fahrzeug liegender Fahrstreckenbereich beleuchtet werden kann. Erfindungsgemäß ist eine Bild-Erfassungseinrichtung, insbesondere eine Kamera vorgesehen, mittels der ein für eine Lichtsteuerung, insbesondere für eine Lichtverteilungssteuerung, des Scheinwerfers relevanter Fahrstreckenbereich bildlich und/oder filmisch erfasst werden kann.

Die sich durch das erfindungsgemäße Scheinwerfermodul ergebenden Vorteile sind identisch mit den bereits gewürdigten Vorteilen der erfindungsgemäßen Anordnung, so dass diese an dieser Stelle nicht wiederholt werden.

Des Weiteren wird auch ein Fahrzeug, insbesondere ein Nutzfahrzeug, mit der erfindungsgemäßen Anordnung und/oder mit dem erfindungsgemäßen Scheinwerfermodul beansprucht. Die sich hieraus ergebenden Vorteile sind identisch mit den Vorteilen der erfindungsgemäßen Anordnung und des erfindungsgemäßen Scheinwerfermoduls, so dass diese hier ebenfalls nicht wiederholt werden.

Die vorstehend erläuterten und/oder in den Unteransprüche wiedergegebenen vorteilhaften Aus- und/oder Weiterbildungen der Erfindung können - außer zum Beispiel in den Fällen eindeutiger Abhängigkeiten oder unvereinbarer Alternativen - einzeln oder aber auch in beliebiger Kombination miteinander zur Anwendung kommen.

Die Erfindung und ihre vorteilhaften Aus- und/oder Weiterbildungen sowie deren Vorteile werden nachfolgend anhand von Zeichnungen lediglich beispielhaft näher erläutert.

Es zeigen:
Fig. 1 in einer Seitenansicht einen Lastkraftwagen mit der erfindungsgemäßen Anordnung;
Fig. 2 in einer schematischen Darstellung den Aufbau der erfindungsgemäßen Anordnung;
und
Fig. 3 in einer Darstellung gemäß Fig. 2 den Aufbau einer Anordnung gemäß dem Stand der Technik.

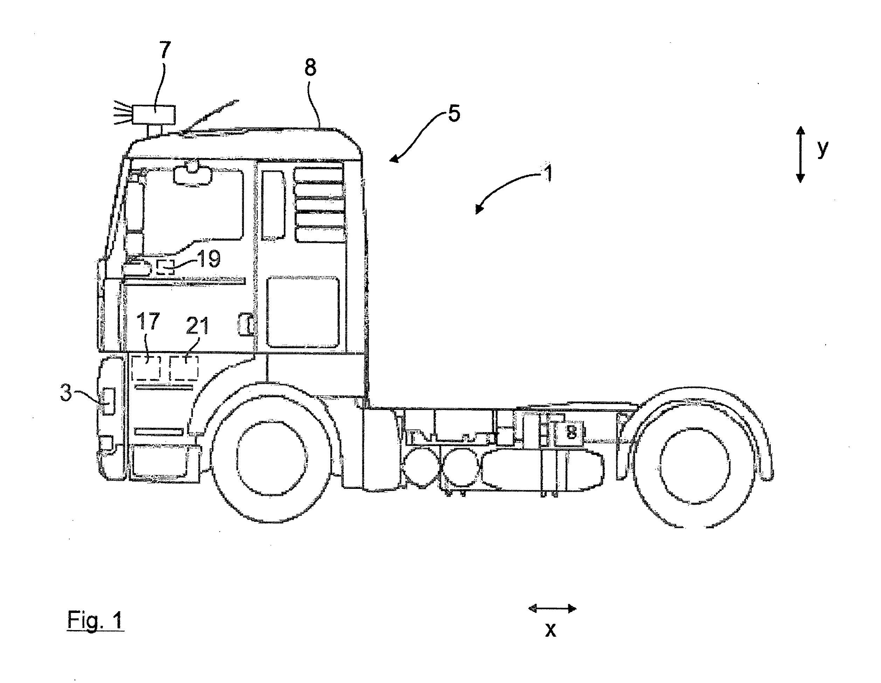

In Fig. 1 ist ein hier beispielhaft als Lastkraftwagen 1 ausgebildetes Fahrzeug gezeigt. Der Lastkraftwagen 1 weist zwei herkömmliche Frontscheinwerfer 3 auf, von denen in Fig. 1 lediglich einer ersichtlich ist. Mittels der Frontscheinwerfer 3 kann ein, in Fahrzeug-Längsrichtung x gesehen, vor dem Lastkraftwagen 1 liegender Fahrstreckenbereich beleuchtet bzw. ausgeleuchtet werden. Die Frontscheinwerfer 3 sind dabei, in Fahrzeug-Längsrichtung x gesehen, vorne und, in Fahrzeug-Hochrichtung z gesehen, unterhalb eines Führerhauses 5 des Lastkraftwagens 1 an dem Lastkraftwagen 1 angeordnet.

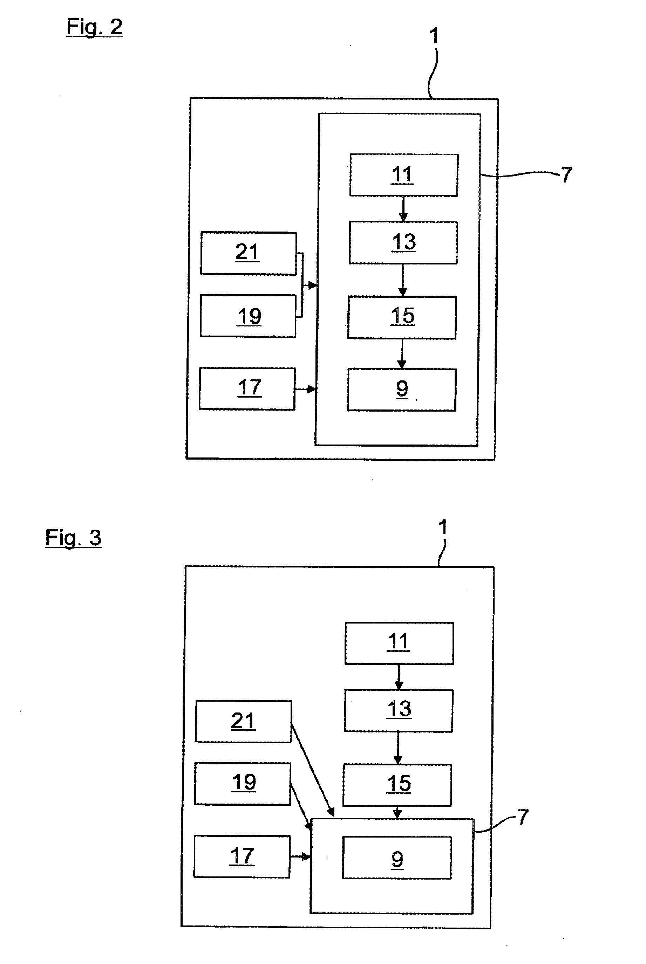

Wie in Fig. 1 weiter gezeigt ist, weist der Lastkraftwagen 1 ein hier beispielhaft als Zusatzscheinwerfermodul 7 ausgebildetes Scheinwerfermodul auf, mittels dem ebenfalls ein, in Fahrzeug-Längsrichtung x gesehen, vor dem Lastkraftwagen liegender Fahrstreckenbereich beleuchtet bzw. ausgeleuchtet werden kann. Das Zusatzscheinwerfermodul 7 ist hier mittels einer geeigneten Festlegungseinrichtung außenseitig an einem Dach 8 des Führerhauses 5 festgelegt bzw. montiert. Zudem ist der Zusatzscheinwerfer 7 hier in einen, in Fahrzeug-Längsrichtung x gesehen, vorderen Bereich des Lastkraftwagens 1 und, in FahrzeugQuerrichtung gesehen, mittig bzw. zentral am Lastkraftwagen 1 angeordnet. Des Weiteren weist das Zusatzscheinwerfermodul 7 eine auf Film- und/oder Bilddaten basierende Lichtsteuerung auf. Der Aufbau des Zusatzscheinwerfermoduls 7 wird im Folgenden anhand der Fig. 2 näher erläutert:

Wie in Fig. 2 gezeigt ist, weist das Zusatzscheinwerfermodul 7 einen Scheinwerfer 9 auf, mittels dem der, in Fahrzeug-Längsrichtung x gesehen, vor dem Lastkraftwagen 1 liegende Fahrstreckenbereich beleuchtet werden kann. Zudem weist das Zusatzscheinwerfermodul 7 auch eine Bild-Erfassungseinrichtung, hier beispielhaft eine Kamera 11, auf, mittels der ein für die Lichtsteuerung des Scheinwerfers 9 relevanter Fahrstreckenbereich bildlich und/oder filmisch erfasst werden kann. Weiter weist das Zusatzscheinwerfermodul 7, hier lediglich beispielhaft, auch eine Bild-Verarbeitungseinrichtung 13 auf, mittels der aus dem mittels der Kamera 11 erfassten Fahrstreckenbereich für die Lichtsteuerung des Scheinwerfers 9 relevante Informationen extrahiert werden können. Zudem weist das Zusatzscheinwerfermodul 7 hier beispielhaft auch eine Regel- und/oder Steuereinrichtung 15 auf, mittels der in Abhängigkeit von den ermittelten Informationen die Beleuchtung des Scheinwerfers 9 selbsttätig bzw. automatisch eingestellt wird. Der Scheinwerfer 9, die Kamera 11, die Bild-Verarbeitungseinrichtung 13 und die Regel- und/oder Steuereinrichtung 15 sind hier somit integrale Bestandteile des Zusatzscheinwerfermoduls 7 und bilden daher eine an dem Lastkraftwagen 1 festlegbare bzw. montierbare Baueinheit aus.

Des Weiteren weist die Bild-Verarbeitungseinrichtung 13, hier lediglich beispielhaft, eine Objekterkennungsfunktion auf, mittels der die in dem mittels der Kamera 11 erfassten Fahrstreckenbereich befindliche Objekte erkannt und deren Positionen relativ zu der Kamera 11 ermittelt werden können. Die Objekte können dabei beispielsweise Fahrzeuge oder Fußgänger sein. Mittels der Objekterkennungsfunktion kann die Beleuchtung des Scheinwerfers 9 beispielsweise derart mittels der Regel- und/oder Steuereinrichtung 15 eingestellt werden, dass, in Fahrzeug-Längsrichtung x gesehen, vor dem Lastkraftwagen 1 fahrende Fahrzeuge oder entgegenkommende Fahrzeuge nicht geblendet werden. Ebenso kann die Beleuchtung des Scheinwerfer 9 beispielsweise auch derart eingestellt werden, dass Objekte, insbesondere Fußgänger, gezielt mittels des Scheinwerfers 9 angeleuchtet werden. Zudem weist die Bild-Verarbeitungseinrichtung 13 hier auch eine Streckenverlauf-Erkennungsfunktion auf, mittels der der Streckenverlauf des mittels der Kamera 11 erfassten Fahrstreckenbereichs ermittelt werden kann. Mittels der Streckenverlauf-Erkennungsfunktion kann die Beleuchtung des Scheinwerfers 9 beispielsweise an den Verlauf der Fahrstrecke angepasst werden. Des Weiteren kann die Beleuchtung des Scheinwerfers 9 beispielsweise auch derart mittels der Regel- und/oder Steuereinrichtung 15 eingestellt werden, dass mittels des Scheinwerfers 9 Zeichen auf die Fahrbahn projiziert werden. Dabei kann beispielsweise die aktuelle Fahrzeuggeschwindigkeit oder Werbung auf die Fahrbahn projiziert werden.

Weiter ist die Regel- und/oder Steuereinrichtung 15, hier lediglich beispielhaft, Bestandteil einer Schwenkausgleichseinrichtung des Lastkraftwagens 1, mittels der Schwenkbewegungen, insbesondere Nick- und/oder Wankbewegüngen, des Scheinwerfers 9 relativ zur Fahrbahn ausgeglichen werden. Die Schwenkausgleichseinrichtung weist eine in den Figuren nicht gezeigte Schwenkerfassungseinrichtung, insbesondere wenigstens einen Beschleunigungssensor und/oder wenigstens ein Gyroskop, auf, mittels der Schwenkbewegungen des Scheinwerfers 9 relativ zur Fahrbahn erfassbar sind. Die Schwenkerfassungseinrichtung ist hier beispielhaft integraler Bestandteil des Scheinwerfermoduls 7 und signaltechnisch mit der Regel- und/oder Steuereinrichtung 15 verbunden. Mittels der Regel- und/oder Steuereinrichtung 15 wird die Beleuchtung des Frontscheinwerfers 9 hier in Abhängigkeit von den mittels der Schwenkerfassungseinrichtung erfassten Schwenkbewegungen eingestellt.

Alternativ oder zusätzlich kann das Scheinwerfermodul 7 zum Ausgleich der Schwenkbewegungen des Scheinwerfers 9 auch mittels einer Festlegungseinrichtung relativ zu dem Lastkraftwagen 1 verschwenkbar an dem Lastkraftwagen 1 festgelegt sein. Die Schwenkausgleichseinrichtung weist dann eine Schwenkeinrichtung auf, mittels der das Scheinwerfermodul 7 in Abhängigkeit von den mittels der Schwenkerfassungseinrichtung erfassten Schwenkbewegungen relativ zu dem Lastkraftwagen 1 verschwenkt wird. Bevorzugt ist die Schwenkeinrichtung dabei integraler Bestandteil des Scheinwerfermoduls 7.

Wie in Fig. 2 weiter gezeigt ist, weist der Lastkraftwagen 1 eine elektrische Energieversorgungs-Einrichtung 17 auf, mittels der das Zusatzscheinwerfermodul 7 mit elektrischer Energie versorgt wird. Die elektrische Energieversorgungs-Einrichtung 17 ist hier kein integraler Bestandteil des Zusatzscheinwerfermoduls 7 und kann beispielhaft eine Starterbatterie des Lastkraftwagens 1 oder ein elektrischer Generator des Lastkraftwagens 1 sein. Gemäß Fig. 2 weist der Lastkraftwagen 1 weiter auch eine durch den Fahrer des Lastkraftwagens 1 betätigbare, im Innenraum des Führerhauses 5 angeordnete Betätigungseinrichtung, hier beispielhaft eine manuell betätigbare Taste 19, auf, durch deren Betätigung das Zusatzscheinwerfermodul 7 aktiviert und deaktiviert werden kann. Im deaktivierten Zustand des Zusatzscheinwerfermoduls 7 sind die Kamera 11, die Bild-Verarbeitungseinrichtung 13, die Regelund/oder Steuereinrichtung 15 und der Scheinwerfer 9 des Zusatzscheinwerfermoduls 7 ausgeschaltet. Im aktivierten Zustand des Zusatzscheinwerfermoduls 7 sind die Kamera 11, die Bild-Verarbeitungseinrichtung 13, die Regel- und/oder Steuereinrichtung 15 und der Scheinwerfer 9 des Zusatzscheinwerfermoduls 7 eingeschaltet. Des Weiteren weist der Lastkraftwagen 1 auch eine Überwachungseinrichtung 21 auf, mittels der die Funktion der Kamera 11, der Bild-Verarbeitungseinrichtung 13, der Regel- und/oder Steuereinrichtung 15 und des Scheinwerfers 9 überwacht bzw. überprüft werden kann. Die Überwachungseinrichtung 21 ist hier ebenfalls kein integraler Bestandteil des Zusatzscheinwerfermoduls 7.

Bevorzugt weist das Zusatzscheinwerfermodul 7 dabei ein einziges Signal-Verbindungselement auf, mittels dem die Taste 19 und die Überwachungseinrichtung 21 signaltechnisch mit dem Zusatzscheinwerfermodul 7 verbunden sind.

In Fig. 3 ist in einer Darstellung gemäß Fig. 2 eine Anordnung gezeigt, wie sie im Stand der Technik üblich ist. Im Vergleich zu der in Fig. 2 gezeigten erfindungsgemäßen Anordnung, umfasst das Zusatzscheinwerfermodul 7 des Stands der Technik gemäß Fig. 3 lediglich den Scheinwerfer 9. Die Kamera 11, die Bild-Verarbeitungseinrichtung 13, die Regel- und/oder Steuereinrichtung 15 sind hier ebenso wie auch die Energie-Versorgungseinrichtung 17, die Taste 19 und die Überwachungseinrichtung 21 kein integraler Bestandteil des Zusatzscheinwerfermoduls 7. Durch die in Fig. 3 gezeigte Anordnung wird das Vorsehen bzw. die Nachrüstung des Zusatzscheinwerfermoduls 7 an dem Lastkraftwagen 1 deutlich erschwert, da die Kamera 11, die Bild-Verarbeitungseinrichtung 13 und die Regel- und/oder Steuereinrichtung 15 separat von dem Zusatzscheinwerfermodul 7 an dem Lastkraftwagen 1 vorgesehen werden müssen.

### Bezugszeichen

- 1: Lastkraftwagen
- 3: Frontscheinwerfer
- 5: Führerhaus
- 7: Zusatzscheinwerfermodul
- 8: Dach
- 9: Scheinwerfer
- 11: Kamera
- 13: Bild-Verarbeitungseinrichtung
- 15: Regel- und/oder Steuereinrichtung
- 17: Energie-Versorgungseinrichtung
- 19: Taste
- 21: Überwachungseinrichtung

## Patentansprüche

1. Anordnung eines Scheinwerfermoduls an einem Fahrzeug, insbesondere an einem Nutzfahrzeug, wobei das Scheinwerfermodul (7) einen Scheinwerfer (9) aufweist, mittels dem ein, in Fahrzeug-Längsrichtung (x) gesehen, vor dem Fahrzeug (1) liegender Fahrstreckenbereich beleuchtbar ist, wobei das Fahrzeug (1) eine Bild-Erfassungseinrichtung (11), insbesondere einer Kamera, aufweist, mittels der ein für eine Lichtsteuerung, insbesondere für eine Lichtverteilungssteuerung, des Scheinwerfers (9) relevanter Fahrstreckenbereich bildlich und/oder filmisch erfassbar ist, wobei das Fahrzeug (1) eine Bild-Verarbeitungseinrichtung (13) aufweist, mittels der aus dem mittels der Bild-Erfassungseinrichtung (11) erfassten Fahrstreckenbereich für die Lichtsteuerung relevante Informationen extrahierbar sind, und wobei das Fahrzeug (1) eine Regel- und/oder Steuereinrichtung (15) aufweist, mittels der in Abhängigkeit von den ermittelten Informationen die Beleuchtung, insbesondere die Lichtverteilung, des Scheinwerfers (9) selbsttätig einstellbar und/oder verstellbar ist, **dadurch gekennzeichnet, dass** die Bild-Erfassungseinrichtung (11) integraler Bestandteil des Scheinwerfermoduls (7) ist, so dass die Bild-Erfassungseinrichtung (11) und der Scheinwerfer (9) eine an dem Fahrzeug (1) festlegbare und/oder montierbare Baueinheit ausbilden.

2. Anordnung nach Anspruch 1, **dadurch gekennzeichnet, dass** die Regel- und/oder Steuereinrichtung (15) integraler Bestandteil des Scheinwerfermoduls (7) ist, und/oder dass die Bild-Verarbeitungseinrichtung (13) integraler Bestandteil des Scheinwerfermoduls (7) ist.

3. Anordnung nach einem der vorhergehenden Ansprüche, **dadurch gekennzeichnet, dass** die Bild-Verarbeitungseinrichtung (13) eine Objekterkennungs-Funktion aufweist, mittels der in dem mittels der Bild-Erfassungseinrichtung (11) erfassten Fahrstreckenbereich befindliche Objekte erkennbar und deren Positionen relativ zu der Bild-Erfassungseinrichtung (11) ermittelbar sind, und/oder dass die Bild-Verarbeitungseinrichtung (13) eine Streckenverlauferkennungs-Funktion aufweist, mittels der der Streckenverlauf des mittels der Bild-Erfassungseinrichtung (11) erfassten Fahrstreckenbereichs ermittelbar ist.

4. Anordnung nach einem der vorhergehenden Ansprüche, **dadurch gekennzeichnet, dass** das Fahrzeug (1) wenigstens eine elektrische Energieversorgungs-Einrichtung (17) aufweist, mittels der das Scheinwerfermodul (7) mit elektrischer Energie versorgbar ist, wobei bevorzugt vorgesehen ist, dass die Energieversorgungs-Einrichtung (17) kein integraler Bestandteil des Scheinwerfermoduls (7) ist.

5. Anordnung nach Anspruch 4, **dadurch gekennzeichnet, dass** die Energieversorgungs-Einrichtung (17) eine Batterie, insbesondere eine Starterbatterie, des Fahrzeugs (1) und/oder ein elektrischer Generator des Fahrzeugs (1) ist, und/oder dass das Scheinwerfermodul (7) ein einziges Energieversorgungs-Verbindungselement, insbesondere einen Stecker, aufweist, mittels dem das Scheinwerfermodul (7) energieübertragend mit der wenigstens einen elektrischen Energieversorgungs-Einrichtung (17) verbindbar ist.

6. Anordnung nach einem der vorhergehenden Ansprüche, **dadurch gekennzeichnet, dass** das Fahrzeug (1) eine, insbesondere manuell, durch den Fahrer des Fahrzeugs (1) betätigbare Betätigungseinrichtung (19), insbesondere einen Schalter und/oder eine Taste, aufweist, durch deren Betätigung das Scheinwerfermodul (7) aktivierbar und deaktivierbar ist, wobei im deaktivierten Zustand des Scheinwerfermoduls (7) die Komponenten (9, 11, 13, 15) des Scheinwerfermoduls (7) ausgeschaltet sind, und wobei im aktivierten Zustand des Scheinwerfermoduls (7) die Komponenten (9, 11, 13, 15) des Scheinwerfermoduls (7) eingeschaltet sind, wobei bevorzugt vorgesehen ist, dass die Betätigungseinrichtung (19) kein integraler Bestandteil des Scheinwerfermoduls (7) ist.

7. Anordnung nach einem der vorhergehenden Ansprüche, **dadurch gekennzeichnet, dass** das Fahrzeug eine Überwachungseinrichtung (21) aufweist, mittels der die Funktion der Komponenten (9, 11, 13, 15) des Scheinwerfermoduls (7) überwachbar und/oder überprüfbar ist, wobei bevorzugt vorgesehen ist, dass die Überwachungseinrichtung (21) kein integraler Bestandteil des Scheinwerfermoduls (7) ist.

8. Anordnung nach Anspruch 6 und 7, **dadurch gekennzeichnet, dass** die Betätigungseinrichtung (19) und die Überwachungseinrichtung (21) kein integraler Bestandteil des Scheinwerfermoduls (7) sind, und dass das Scheinwerfermodul (7) ein einziges SignalVerbindungselement, insbesondere einen Stecker und/oder eine kabellose Signal-Übertragungseinrichtung, aufweist, mittels dem die Betätigungseinrichtung (19) und die Überwachungseinrichtung (21) signaltechnisch mit dem Scheinwerfermodul (7) verbindbar sind.

9. Anordnung nach einem der vorhergehenden Ansprüche, **dadurch gekennzeichnet, dass** eine Schwenkausgleichseinrichtung vorgesehen ist, mittels der Schwenkbewegungen, insbesondere Nick- und/oder Wankbewegungen, des Scheinwerfers relativ zur Fahrbahn ausgleichbar sind, wobei die Schwenkausgleichseinrichtung eine Schwenkerfassungseinrichtung, insbesondere wenigstens einen Beschleunigungssensor und/oder wenigstens ein Gyroskop, aufweist, mittels der die Schwenkbewegungen des Scheinwerfers relativ zur Fahrbahn erfassbar sind, wobei bevorzugt vorgesehen ist, dass die Schwenkerfassungseinrichtung integraler Bestandteil des Scheinwerfermoduls ist.

10. Anordnung nach Anspruch 9, **dadurch gekennzeichnet, dass** das Scheinwerfermodul mittels einer Festlegungseinrichtung relativ zu dem Fahrzeug verschwenkbar an dem Fahrzeug festgelegt ist, und dass die Schwenkausgleichseinrichtung eine Schwenkeinrichtung aufweist, mittels der das Scheinwerfermodul in Abhängigkeit von den mittels der Schwenkerfassungseinrichtung erfassten Schwenkbewegungen relativ zu dem Fahrzeug verschwenkbar ist, wobei bevorzugt vorgesehen ist, dass die Schwenkeinrichtung integraler Bestandteil des Scheinwerfermoduls ist.

11. Anordnung nach Anspruch 9 oder 10, **dadurch gekennzeichnet, dass** die Schwenkausgleichseinrichtung signaltechnisch mit der Regel- und/oder Steuereinrichtung verbunden ist, und dass mittels der Regel- und/oder Steuereinrichtung die Beleuchtung des Scheinwerfers in Abhängigkeit von den mittels der Schwenkerfassungseinrichtung erfassten Schwenkbewegungen einstellbar und/oder verstellbar ist.

12. Anordnung nach einem der vorhergehenden Ansprüche, **dadurch gekennzeichnet, dass** das Scheinwerfermodul (7) in einem, in Fahrzeug-Längsrichtung (x) gesehen, vorderen Bereich des Fahrzeugs (1) angeordnet ist, und/oder dass das Scheinwerfermodul (7), in Fahrzeug-Querrichtung (y) gesehen, mittig am Fahrzeug (1) angeordnet ist.

13. Anordnung nach einem der vorhergehenden Ansprüche, **dadurch gekennzeichnet, dass** das Scheinwerfermodul (7) als Zusatzscheinwerfermodul ausgebildet ist, und/oder dass das Scheinwerfermodul (7), insbesondere außenseitig, an einem Dach (8) des Fahrzeugs (1), insbesondere an einem Dach (8) eines Führerhauses (5) eines als Lastkraftwagen ausgebildeten Fahrzeugs (1), festgelegt und/oder montiert ist.

14. Scheinwerfermodul für ein Fahrzeug, insbesondere für ein Nutzfahrzeug und/oder zur Verwendung in einer Anordnung nach einem der vorhergehenden Ansprüche, mit einem Scheinwerfer (9), mittels dem ein, in Fahrzeug-Längsrichtung (x) gesehen, vor dem Fahrzeug (1) liegender Fahrstreckenbereich beleuchtbar ist, **dadurch gekennzeichnet,**
**dass** eine Bild-Erfassungseinrichtung (11), insbesondere einer Kamera, vorgesehen ist, mittels der ein für eine Lichtsteuerung, insbesondere für eine Lichtverteilungssteuerung, des Scheinwerfers (9) relevanter Fahrstreckenbereich bildlich und/oder filmisch erfassbar ist.

15. Fahrzeug, insbesondere Nutzfahrzeug, mit einer Anordnung nach einem der Ansprüche 1 bis 13 und/oder mit einem Scheinwerfermodul nach Anspruch 14.
